(19) Europäisches Patentamt

European Patent Office

Office européen des brevets

(11) **EP 1 223 547 B1**

(12) **EUROPEAN PATENT SPECIFICATION**

(45) Date of publication and mention
of the grant of the patent:
**10.05.2006 Bulletin 2006/19**

(51) Int Cl.:
**G06N 3/00** *(2006.01)*      **G06F 19/00** *(2006.01)*

(21) Application number: **00940777.6**

(22) Date of filing: **21.06.2000**

(86) International application number:
**PCT/JP2000/004050**

(87) International publication number:
**WO 2000/079479 (28.12.2000 Gazette 2000/52)**

(54) **METHOD AND DEVICE FOR NETWORK INFERENCE**

VERFAHREN UND VORRICHTUNG ZUR NETZWERK FOLGERUNG

PROCEDE ET DISPOSITIF D'INFERENCE DE RESEAU

(84) Designated Contracting States:
**CH DE FR GB LI**

(30) Priority: **21.06.1999  JP  17442699**

(43) Date of publication of application:
**17.07.2002  Bulletin 2002/29**

(73) Proprietor: **Japan Science and Technology
Corporation
Kawaguchi-shi,
Saitama 332-0012 (JP)**

(72) Inventors:
  • **KITANO, Hiroaki
    Kawagoe-shi, Saitama 350-0035 (JP)**
  • **MOROHASHI, Mineo
    Kita-ku, Tokyo 114-0024 (JP)**
  • **KYODA, Koji
    Yokohama-shi, Kanagawa 227-0036 (JP)**
  • **HAMAHASHI, Shugo
    Kawasaki-shi,
    Kanagawa 211-0025 (JP)**

(74) Representative: **Hofer, Dorothea et al
Prüfer & Partner GbR
Patentanwälte
Harthauser Strasse 25 d
81545 München (DE)**

(56) References cited:
**WO-A1-90/11568**

• **AKUTSU T ET AL: "Identification of Genetic
Networks from a Small Number of Gene
Expression Patterns under the Boolean Network
Model" PROCEEDINGS: PACIFIC SYMPOSIUM
ON BIOCOMPUTING (PSB '99), [Online] 4 - 9
January 1999, pages 17-28, XP002216333 Hawaii
Retrieved from the Internet: <URL:http:
//www.smi.stanford.edu/projects/
helix/psb99/Akutsu.pdf> [retrieved on
2002-10-10]**
• **NODA K ET AL: "Finding Genetic Network from
Experiments by Weighted Network Model"
GENOME INFORMATICS WORKSHOP, [Online]
vol. 9, 10 - 11 December 1998, pages 141-150,
XP002216334 Tokyo, Japan Retrieved from the
Internet: <URL:http://www.jsbi.org/
journal/GIW98/GIW 98F15.pdf> [retrieved on
2002-10-10]**
• **MOROHASHI M AND KITANO H: "Identifying
Gene Regulatory Networks from Time Series
Expression Data by in silico Sampling and
Screening" ADVANCES IN ARTIFICIAL LIFE.
PROCEEDINGS OF THE 5TH EUROPEAN
CONFERENCE ON ARTIFICIAL LIFE, 13 - 17
September 1999, pages 477-486, XP008009115
Lausanne, Switzerland**
• **TETSUSHI YATA ET AL.: 'Kakure markov model
to identeki algorithm ni yoru DNA hairetsu no
signal pattern chuushitsu' TRANSACTIONS OF
INFORMATION PROCESSING SOCIETY OF
JAPAN (IPSJ) vol. 37, no. 6, 15 June 1996, pages
1117 - 1129, XP002931712**

• **JOHN YEN ET AL.: 'A hybrid approach to modeling metabolic systems using a genetic algorithm and simplex method' IEEE TRANSACTIONS ON SYSTEMS, MAN AND CYBERNETICS PART B: CYBERNETICS vol. 28, no. 2, 30 April 1998, pages 173 - 191, XP002931711**

**Description**

Technical Field

The present invention relates to inverse estimation of a system that can be represented with a network model comprised of interfering discrete elements related to each other, from information representing the behavior and status of such network. In particular, it is related to estimation, from gene expression data, protein concentration data, and related data occurring in biological phenomena, of the structure, etc. of a genetic control network bringing about that biological phenomenon and of a metabolic network showing reactions of enzymes and proteins.

Background Art

Due to recent rapid advances in molecular biology, much information concerning major organisms is continuously being amassed. Classic examples include yeasts, nematodes, and fruit flies. For example, with nematodes (*C. elegans*), estimation of their entire cell lineage and identification of bonds in their nervous system has already been carried out, with the determination of the entire DNA base sequence being announced last year. The entire DNA base sequence of model organisms such as yeasts, *E. coli,* and mycoplasma, and even human has also already been determined. Nevertheless, there is a large difference between knowing the DNA sequence, and understanding each gene, its function, and the interactions between genes.

Determination of such genetic functions and interactions between genes is an exceeding difficult task. A great deal of the current research in molecular biology is placing emphasis on locating genes related to noteworthy phenomena and the products of their transcription, and determination of their cascade regulation. At the stage where comprehension of the interaction between such genes takes place, understanding of complex interactions using only human intuition is extremely difficult. This is because of the large volume of data and various relationships between the interactions related to this that can be considered. We are attempting to overcome this difficulty by introducing a tool having computational ability.

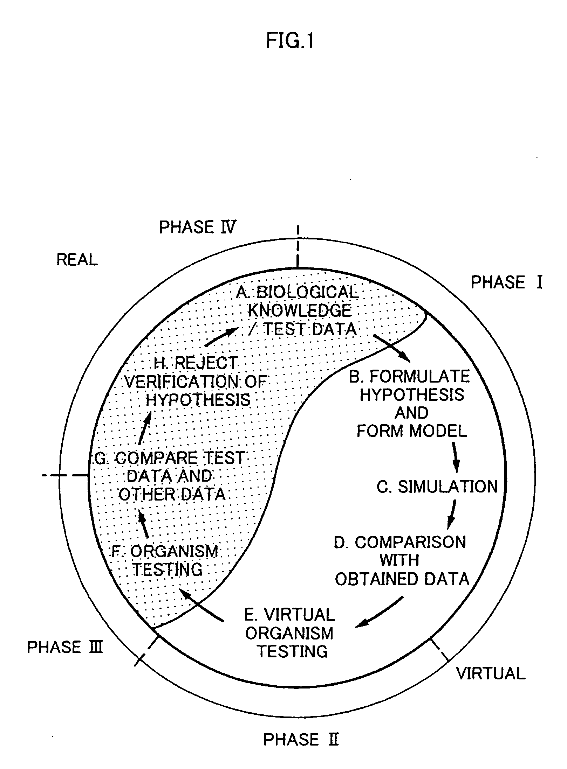

This theory is expressed schematically in FIG. 1. This diagram shows the relationship between the portion using a computer (virtual portion), and the portion actually biologically tested (real portion). In FIG. 1, first, once the phenomena to be investigated is specified, based on currently known biological information (FIG. 1 PHASE I A), a model is loaded into a computer (FIG. 1 PHASE I B). In addition, in cases where a hypothesis has already been presented, that hypothesis is loaded. Using the loaded model, a simulation is performed (FIG. 1 PHASE I C), and its consistency with observed data is subjected to verification (FIG. 1 PHASE I D). When the simulation results and observed data do not match, two possibilities can be considered. First, the simulation may not have been exact. This can be solved by improving the accuracy of the simulation and making it more reliable. The next thing to be considered is that the model may be incomplete or incorrect. In this case, it is necessary to rebuild a model consistent with known test data.

Afterwards, if possible, computer testing is performed using this model (FIG. 1 PHASE II F). Actual biological testing is then begun after Phase II, or directly if Phase II is not possible, to see if the hypothetically decided models are correct (FIG. 1 PHASE III and IV).

In this manner "reverse engineering of biological systems" can be carried out.

Fields where it is necessary to narrow down hypothetically found models using this sort of computerized simulation, are not limited to fields of the above-mentioned organisms.

Akutsu T., Miyano S., Kuhara S.: "Identification of Genetic Networks from a Small Number of Gene Expressions Patterns under the Boolean Network Model", Proceedings: Pacific Symposium on Biocomputing (PSB'99), [online], January 4-9, 1999, Hawaii, pages 17-28 disclose a method for identifying genetic networks from gene expression patterns. Boolean networks are generated and checked whether they are consistent with a given expression profile. Only the boolean networks consistent with the expression profile are output.

Noda K. et al.: "Finding Genetic Network from Experiments by Weighted Network Model", Genome Informatics Workshop, [Online], vol. 9, December 10-11, 1998, Tokyo, pages 141-150 disclose a method for finding a genetic network from data obtained by multiple gene disruptions and overexpressions. A network is defined as a weighted graph and output as a pair of a weighted matrix and a threshold vector. To fit the weights and thresholds to given data, an optimization is carried out until it converses or the preset maximum loop number is exceeded.

The object of the present invention is to efficiently narrow down hypothetically found models using a computer.

For example in the field of molecular biology, it lies in using a computer to estimate, from for example data related to changes over time in the amount of genetic material or protein obtained using DNA chips, microarrays, or PCR, etc., and data relating to activity of neural networks obtained using such as electrophysiological testing or voltage sensitive dye, a model represented with a network with interactions of genes, enzymes, or proteins, and a neural network. The total number of models that can be considered from the given data is tremendous. This has conventionally been achieved by using human intuition to make guesses, evaluate them, and then carry out biological testing for confirmation of their validity. The present invention tries to estimate models (networks that may allow for generation of similar data, from given data by using a computer, in order to measurably narrow down the number of reliable models into a smaller number of models. In the case shown in the above-mentioned FIG. 1, this correlates to Phase I.

Estimation of these models of interaction (network estimation) is necessary for identifying genetic causes of diseases and estimating the effects of medications. Furthermore, this can also be used to determine unknown genes and gene products.

The object is attained by a method according to Claim 1. Further developments of the invention are specified in the dependent claims.

This allows inverse estimation of a system that can be represented with a network model comprised of interfering discrete elements related to each other, from data representing the behavior, status, product, etc. of such network.

The step of selecting network structures capable of reproducing the given data is performed in cases where there exist many networks including the parameters. Random selection of network structures, for example, can be performed for this selection step.

The step of producing with high frequency network structures which reproduce data having a low margin of error with the given data increases the probability of selecting networks having a high likelihood of reproducing the given data.

The step of reorganizing a portion of the networks, which reproduce data having a low margin of error with the given data so as to produce network structures can be achieved, for example, by using a genetic algorithm (GA).

These network structures are obtained through a coarse, global search of the network structure space.

Simulated annealing (SA), for example, may be used for a local search.

By utilizing such a hybridization of a global search and a local search of network structures, it is possible to efficiently select an optimum network structure.

If estimation is performed using a genetic algorithm (GA), simulated annealing (SA), and/or an optimization technique such as the hill-climbing method, it is possible to speed up estimation of optimum network structure parameters for reproduction of the given data.

Thus, in the end, a comparatively small number of optimized candidate networks can be efficiently obtained.

The object also is attained by an apparatus according to claim 5 or a computer program according to claim 6.

**BRIEF DESCRIPTION OF DRAWINGS**

FIG. 1 is a diagram for describing computer use in molecular biology.

FIG. 2 is diagrams showing an example of a genetic network; (a) is an exemplary view of a genetic network; and (b) shows a network example. In FIG. 2(b), A, B, C, and D are genetic expressions.

FIG. 3 is a diagram showing an expression profile and its corresponding network. A wild-type expression profile is shown in (a); an example where there are three nodes is shown in (b); a $B^-$ expression profile is shown in (c); and a $C^-$ expression profile is shown in (d).

FIG. 4 is an abbreviated flow chart of an example of processing in the embodiment.

FIG. 5 is a diagram describing the fan-out limit of the network. Bonds between nodes are shown in (a). The relationship of the constraints and the probability of fan-out is shown in (b).

FIG. 6 is a selection processing flowchart and FIG. 7 is a diagram for describing a selection processing technique. In FIG. 7, n topologies, each different from the others, are randomly chosen, and the introduction of a plurality of triplets through parameter tuning using GA, SA, etc. for one of the topologies is shown. Each value of the parameter set is different (For example, $P_0^0 \neq P_0^1 \neq ... \neq P_0^M$).

FIG. 8 is a diagram describing a new search using SA. In FIG. 8 there are P triplets in the topology space and the portion within the slashed line is the portion which becomes the target of SA.

FIG. 9 is a diagram for describing selection processing of candidates, and shows the case where the topology is structured from x nodes.

FIG. 10 is a diagram for describing an example of total processing of fitness, and shows an example where the sum of all degrees of fitness is assumed as the fitness of each topology.

FIGS. 11(a) and (b) are an example presented where SA is performed and a diagram showing the initial grouping.

FIG. 12 is a diagram showing an example of GA application. Parameters of the topology are shown in (a); and are represented by a list of bond weights and threshold values (slashed portion). Formation of the individual grouping of the second generation through mutation of the individual grouping of the first generation is shown in (b).

FIG. 13 is diagrams showing the performance of GA processing in detail. Crossover is shown in (a) and mutation in is shown (b).

FIG. 14 is a diagram showing an example of two-dimensional GA application, wherein an example of two-dimensional GA crossover is shown. A schematic of the example shown in the bond matrix of (a) is shown in (b).

FIG. 15 is an example for describing a vicinity search using SA; wherein a state transition diagram is shown in (a), a graph of the change in state transition probability is shown in (b), and topology is shown in (c).

FIG. 16 is a flowchart showing candidate triplet selection processing using mutation.

FIG. 17 is a diagram showing an example of a genetic/metabolic network; wherein (a) is an example of codes used in a genetic/metabolic network, and (b) is an example of a network in which they are used.

FIG. 18 is a diagram showing data used in a target profile; wherein (a) is an example of zero-dimensional space data, (b) is one-dimensional space data, (c) is two-dimensional space data, and (d) is three-dimensional space data.

## PREFERRED EMBODIMENTS OF THE PRESENT INVENTION

An embodiment of the present invention is described forthwith in detail while referencing the drawings.

The present invention can be applied to cases of estimating many different variables determining the structure of a genetic control network bringing about a certain biological phenomena or a metabolic network showing reactions of enzymes and proteins, and reaction strength and speed, using profiles of, for example, genetic expression data or protein concentration data occurring in such phenomenon. An example in this case is described below.

### Genetic Network

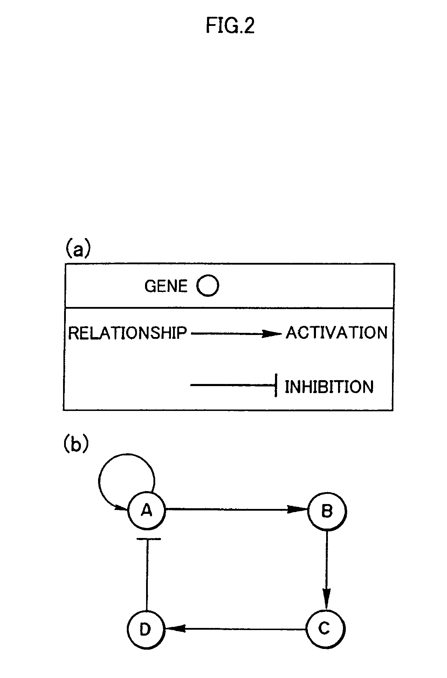

An embodiment of the present invention is described using an example of a network showing genetic interrelations such as those shown in FIG. 2. FIG. 2(a) shows the relationship showing activation of expression of material expressing the genes as nodes, and the relationship showing inhibition. The figure showing this as a network structure is FIG. 2(b). In FIG. 2(b), A, B, C, and D are types of genetic expression.

The genetic network for a given target profile (expression profile), can be represented by a "triplet", which has three units comprising: network structure (topology), which shows the reacting relationship between structural elements (DNA, RNA, proteins, etc.); a parameter set, which is a set of variables necessary when describing a model of reactions and states within the network; and degree of fitness, which shows similarity with the target profile.

To begin with, an example of a genetic network structure is described. The reaction rules between structural elements (nodes) can be simplified and represented by $N \times N$ bond weight matrix W (parameter set) and bond matrix C (network structure). The value w of bond weight matrix W takes a real number between, for example, +1.0 and -1.0, with a negative value for w showing inhibition, and a positive value showing activation. In bond matrix C, the two values 0 or 1 for element $C_{pq}$ shows the bond relationship between node p and node q. 0 means that there is no bond relationship between nodes, and 1 shows that there is a bond relationship. In addition, the expressional state of a genetic network structure including N nodes occurring at time t, can be expressed with N-dimensional space vector x(t). Each element of vector x is represented by $x_i(t)$ (i = 1,..., N). If $S_i(t)$ is made the concentration of expressions of element i (i = 1, ..., N), and $h_i$ is made the threshold value determining the activation level of active elements i, each of the elements can be defined, for example, in the following manner. This function allows various definitions.

$$x_i(t+1) = F\left( \sum_{j=1}^{N} c_{ji} w_{ji} s_i(t) - h_i \right)$$

here :

$$F(u) = \begin{cases} 0 & (u < 0) \\ u & (0 \le u < 1) \\ 1 & (u \ge 1) \end{cases}$$

### Outline of Processing of Embodiment

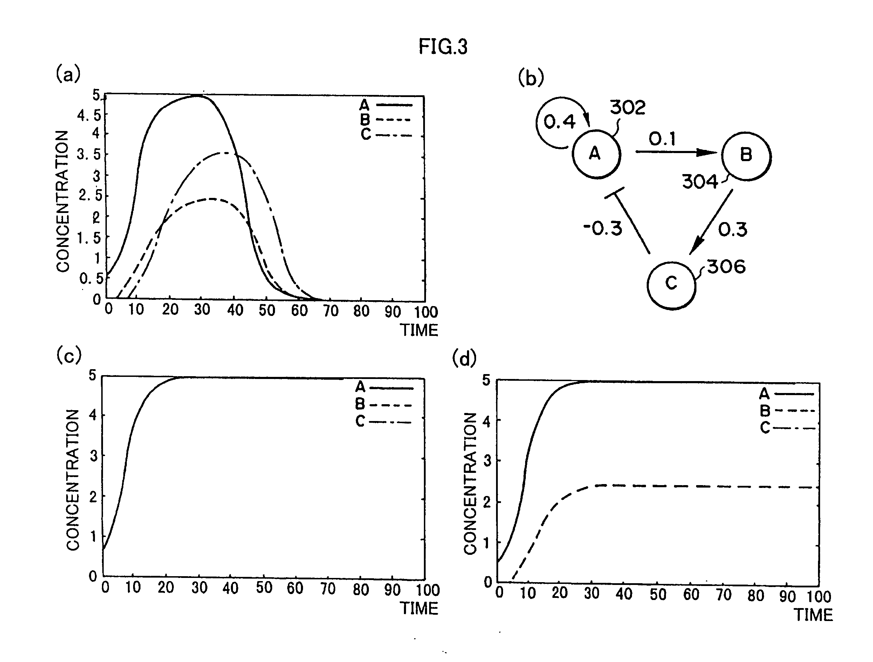

In the case of such a genetic network, given an expression profile, which is shown as the changes in concentration of a plurality of expression materials over time, it is the object of the present invention to find a candidate genetic network expressing this expression profile. For example, the expression profile such as shown in FIG. 3(a) is given, and a candidate genetic network such as shown in FIG. 3(b) is to be found. It is noted that the expression profile shown in this FIG. 3(a) is an expression profile for a wild-type genetic structure. It is preferable that the first expression profile used be a wild type such as shown here.

The numbers of the bond (link) portions of the network show the absolute values of values w of bond weight matrix W mentioned above. It is noted here that whether the sign of value w of bond weight matrix W is negative or positive is determined by whether the bond is activation or inhibition. In addition, a mutant profile where there is no gene B and a mutant profile where there is no gene C are respectively illustrated in FIG. 3(c) and FIG. 3(d). The manner in which this profile is used is described later.

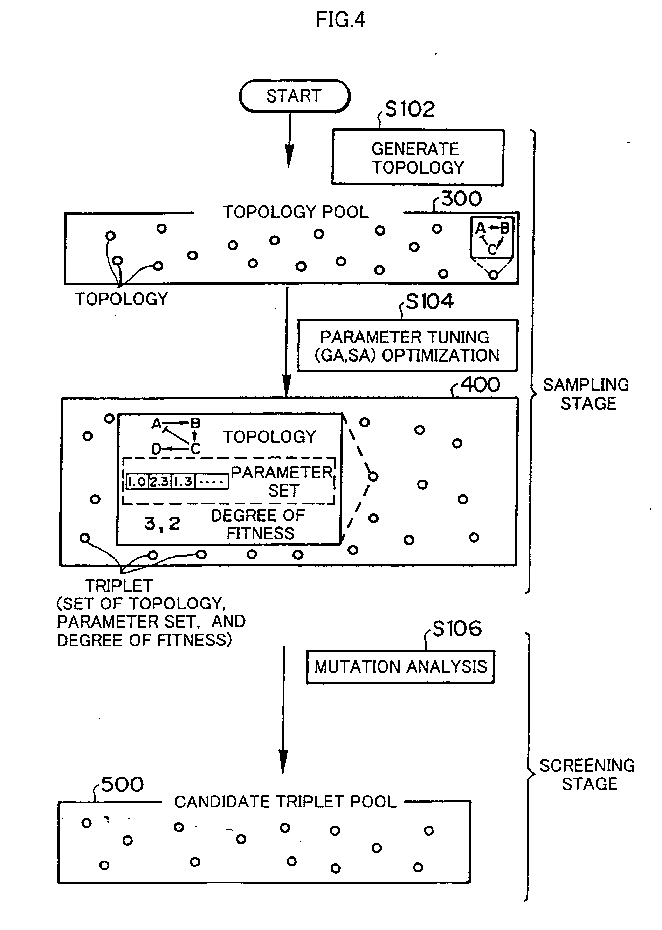

This embodiment is performed in accordance with the process shown in the abbreviated flowchart of FIG. 4. In FIG. 4, first, the structure of a network allowing the targeted expression profile to be provided is assumed, that network structure (topology) is generated, and topology pool 300 is formed (S102).

In cases where the number of network structures assumed is small, all of the network structures assumed can be generated and stored in topology pool 300; however, in cases where the number of network structures assumed is large, it is necessary to provide certain limits for the topologies to be stored in topology pool 300.

It is noted that it is not always necessary for the topologies to be generated and stored in topology pool 300. If the topology space to be formed can be defined based on the network structure assumed, an algorithm creating an arbitrary topology from this defined topology space can be utilized to achieve the same result as taking a topology from topology pool 300.

Parameters from the expression profile are adapted to each respective created topology using the degree of fitness (S104). The parameters are the values of the above-mentioned bond weight matrix W and a threshold value. In addition, the degree of fitness is the likelihood of these parameters (how much they match). This degree of fitness is computed using a performance function; and this performance function may be, for example, a least square error.

As described earlier, the combination of parameters and degree of fitness with the network structure (topology) is referred to as a triplet (a three-point set of topology, parameters, and degree of fitness). A triplet resulting from processing is stored in triplet pool 400. When a topology is selected, parameters are adapted, and the degree of fitness is calculated, optimization is performed for a given expression profile using techniques such as GA (genetic algorithms) or SA (simulated annealing : an annealing method).

Up to this point is the stage of extracting specimens (triplets), which are objects to be processed. From this point on is the stage of narrowing down specimens (triplets) adapted for the objective from triplet pool 400. In this processing, for example, mutation analysis is utilized (S106). As a result of this processing, specimens (triplets) are narrowed down, allowing an objective group of candidate triplets (candidate triplet pool 500) to be formed.

**Network Extraction Process**

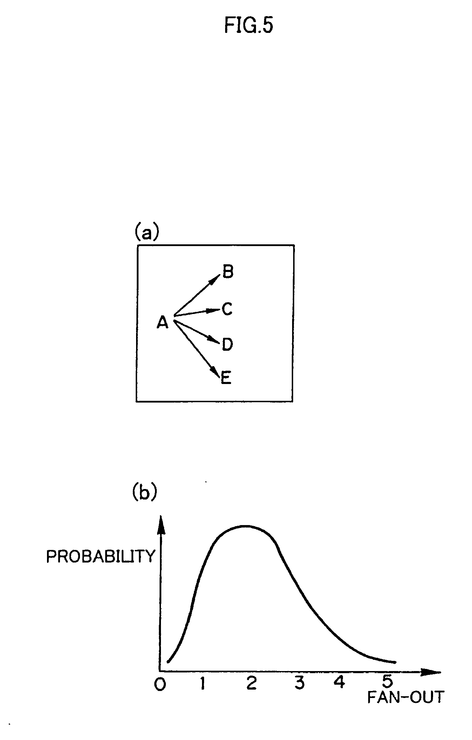

Processing involved in generation of network structure (S102) establishes, for example, the maximum assumable number of nodes included in the network. The structure of that network may be generated without any prior knowledge, or it may be generated based on a network, the structure thereof being partially known. The generated network is stored in topology pool 300. The known structure of the network in this case may have, for example, fan-out limits. This is described in FIG. 5. Fan-out refers to the number of actions (activations, inhibitions) from one node to another node. FIG. 5(a) shows that there are four fan-outs from A to B through E. It is considered that the number of fan-outs has limitations, and as in the example shown in FIG. 5(b), these limitations are shown as a probability. In FIG. 5(b), it is shown that the probability of the number of fan-outs is maximized near 2, and the probability of the number of fan-outs from 5 and higher can almost be ignored. It is noted that these limitations can be defined in various ways.

In addition, in cases where already identified bonds and un-bonds are known, a network structure is produced for portions except for such bonds. When the network structure is to be produced, it is possible to produce it by hypothesizing bond structures in some portions. Topologies can also be prepared by applying constraints to various structures in this manner.

Whether the parameters and the degree of fitness are adapted to all of the network structures (topologies) stored in topology pool 300 and then stored in triplet pool 400, or extracted and then stored, depends on the number of networks that can be generated. When there are only a few networks capable of being generated, more specifically, in cases where there are few network nodes, since it is possible to comprehensively process all of the possible networks, the parameters and the degree of fitness can be adapted to all of the generated topologies and stored in triplet pool 400. However, in cases where there is an immense number of networks to generate and the total number cannot be examined, topologies are selected, parameters and degrees of fitness are apportioned, and they are stored in triplet pool 400.

## Case of Many Topologies Existing

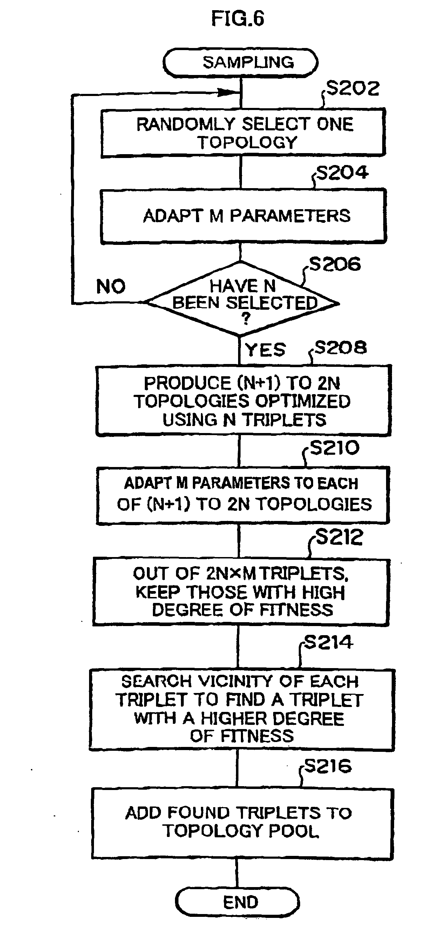

Processing occurring in cases where there is an immense number of topologies and topology selection is necessary are described forthwith in detail using the flowchart in FIG. 6, and FIG. 7 and FIG. 8.

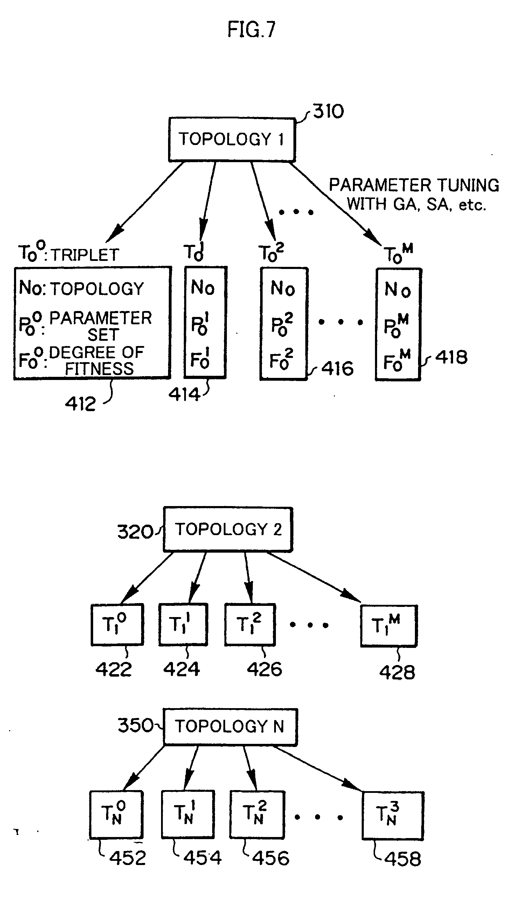

Referring to FIG. 7 and the flowchart of FIG. 6, first, the number of topologies to be selected is determined. In this case, N topologies are said to be randomly selected. From topology pool 300 (or the topology space) of FIG. 4, one topology 310 is then randomly taken (S202). Expression parameters capable of achieving the given expression profile are then adapted to this using, for example, GA (genetic algorithm) or SA (simulated annealing) (S204). At this point, M (412, 414, 416, and 418) differing parameter sets, which have the highest degree of fitness with the given expression profile according to each expression parameter, are taken and stored in triplet pool 400. This is repeated for N topologies. During the repetition, in the step of randomly selecting a topology (S202), one of a structure differing from earlier chosen topologies is selected. At the stage where repetition is ended (YES at S206), N × M triplets are stored in triplet pool 400.

It is noted that in the above, topologies are randomly selected; however, other statistical samplings may be utilized. In addition, when M differing parameter sets are taken, the degrees -of similarity among parameter sets are calculated, and when those degrees of similarity are extremely close to one another (less than a certain threshold), they may be viewed as equivalent and not selected. Since it is pointless to select a plurality of similar solutions, this means that only a representative value is selected.

Next, N network structures (topologies), which are the N triplets stored in triplet pool 400 that have been reorganized by topology, are obtained through, for example, GA/SA (S208). As with the above, a parameter set is adapted to each of these (N + 1) to 2N topologies obtained using GA/SA, and except for the M triplets having high degrees of fitness with the expression profile, they are stored in triplet pool 400 (S210). As a result, (2N × M) triplets are stored in triplet pool 400. Of these (2N × M) triplets, P triplets having values at or below a predetermined threshold value are selected from among those having high degrees of fitness and are left in triplet pool 400 (S212). With this, there are now P triplets stored in triplet pool 400. The processing up to this point has been a global triplet search.

## Local Search

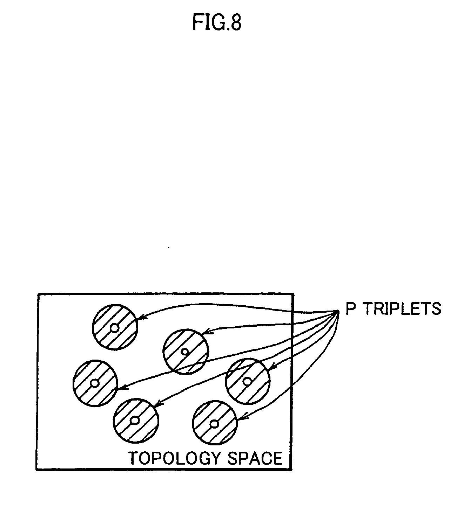

The vicinities of the P triplets stored in triplet pool 400 are searched using, for example, SA (simulated annealing) to find a triplet having a higher degree of fitness (S214). This is shown in FIG. 8. FIG. 8 shows a search performed on topology space including the respective vicinities of each of the P triplets, which is a space of interest for SA. Through this, triplets having an even higher degree of fitness can be obtained. In cases where a triplet having a higher degree of fitness is found, it is also stored in triplet pool 400 (S216). This results in P or more triplets being stored in triplet pool 400.

It is noted that at this point, in the case where a triplet having a higher degree of fitness is found in the vicinity of another triplet, that triplet is replaced and the triplet having the higher degree of fitness can be stored in triplet pool 400. In this case, the number of triplets stored in triplet pool 400 remains at P.

Here, searches are performed in the vicinities using SA; however, it is also possible for other techniques to be performed, such as the hill climbing method (a method where the most favorable point of the possible search points is selected as the search progresses).

As a result, since the improved degrees of fitness of the triplets are stored in triplet pool 400, at the point in time where the sampling stage ends, probability is high that the targeted triplet is among the triplets stored in triplet pool 400. Nevertheless, the number of triplets at this stage is still not low enough for biological testing to be preformed.

## Narrowing-Down Process

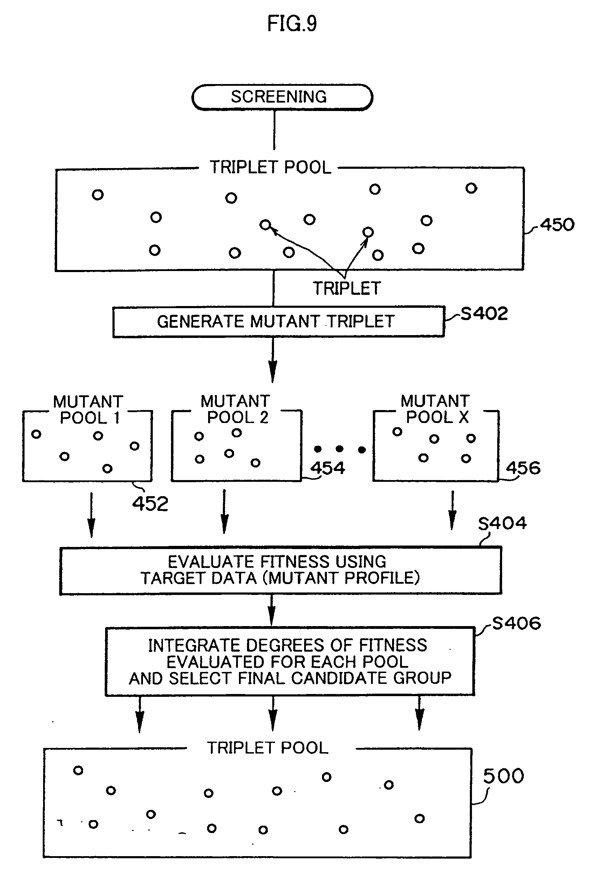

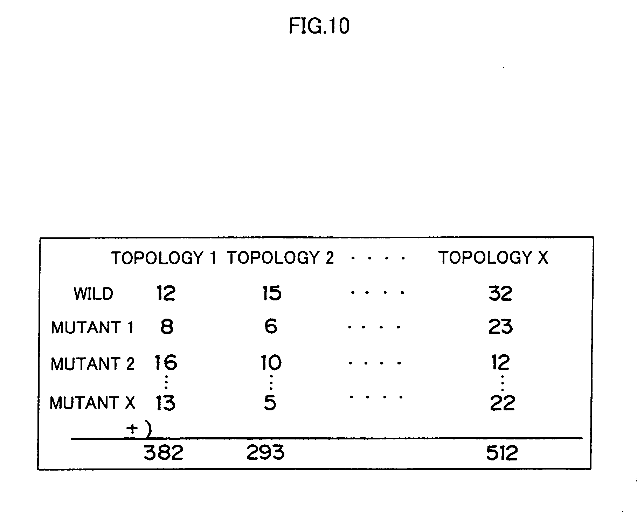

Next is the-stage where processing is performed to select an even smaller number of candidate triplets from the triplets stored in triplet pool 400. This processing is described forthwith using the example of FIG. 9 and FIG. 10, which uses mutation analysis.

In FIG. 9, a mutant triplet is produced for each triplet from triplet pool 400 (S402). The mutant triplet in this case is produced by eliminating (knocking-out) a gene, and removing all of the bonds from that gene. At this point, neither the other bonds in the triplet nor the parameters are changed. This is then performed for the genes (nodes of the network structure). Accordingly, of the nodes in the topology of a triplet, once each node of the respective x genes is knocked-out, it is possible to have x mutant pools 452 to 456 storing the respective mutant triplets. Each degree of fitness with each respective mutant profile, which is the given target data, is then evaluated for each mutant pool (S404). Next, the degrees of fitness evaluated for each mutant pool are integrated, and ultimately, a candidate group having a degree of fitness above a certain value is chosen and stored in candidate triplet pool 500 (S406). In this case, the obtained candidate triplets may be sorted by degree of fitness, and referencing that degree of fitness, biological testing can be performed starting with the highest.

Besides using the above-mentioned knocking-out for the mutation used here, any of, for example, heterozygote, over expression, or temperature sensitive mutation methods may possibly be used. For example, a heterozygote is a mutation that reduces the total amount of genetic expression by half by crushing one of the allelic genes of a specific gene locus on a homologous chromosome. In addition, over expression is a mutation which over-expresses a certain gene. Temperature sensitive mutation is a mutation that uses a certain temperature sensitive material to halt genetic expression, or over-express, at a certain time point while taking measurements.

**Example of Calculating Fitness Integration**

This example of calculating fitness integration is described forthwith using FIG. 10. FIG. 10 shows an example where the total of the degrees of fitness of each topology of all of the mutations (including non-mutant wild-types) are handled as the fitness of that topology. In this calculation example, a simple total is done; however, depending on needs, each mutation may be weighted and added.

A mutant expression profile does not always need to be obtained for all of the mutant gene networks to be examined. In this case, only the obtained mutant expression profiles are used to calculate fitness and perform integration. In this manner, candidate triplets can finally be obtained.

**Embodiment**

The above-mentioned processing is described forthwith in detail using a concrete genetic triplet example. A genetic network for achieving an expression profile, which is data in time series as shown in FIG. 3(a), is used for this example.

To begin with, coding of a chromosome is performed based on a bond matrix representative of the bond relationships of the topology. Since there are three expression materials shown in FIG. 3(a), the topology of a network with three nodes is represented by the following bond matrix C. This is shown in FIG. 3(b).

$$C \quad = \quad \begin{pmatrix} 1 & 1 & 0 \\ 0 & 0 & 1 \\ -1 & 0 & 0 \end{pmatrix}$$

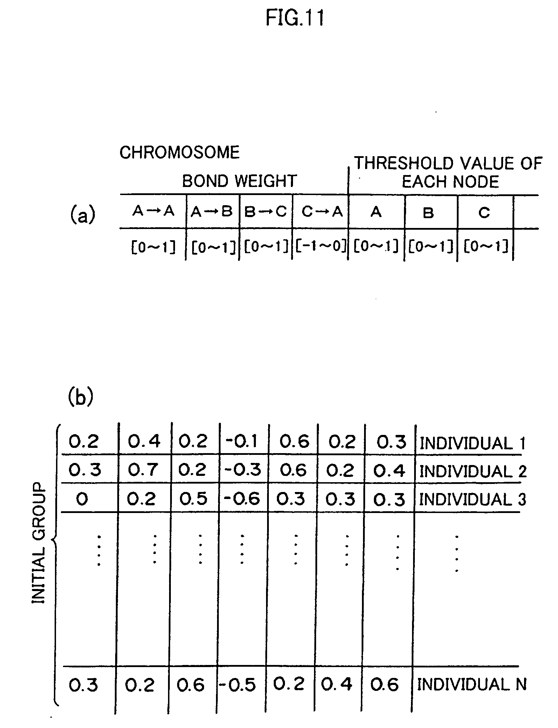

Since there are bonds at four loci in this topology and it is necessary to weigh each of them, a chromosome having four genotypes is produced. Since it is also necessary to optimize the threshold value of each node, a chromosome which eventually has, in total, 4 (number of bonds) + 3 (number of node threshold values) = 7 genotypes is produced. The range (real number values) of possible threshold values and chromosome weights in this case are as shown in FIG. 11(a). A plurality of such topologies capable of achieving the expression profile shown in FIG. 3(a) are produced, and stored in topology pool 300 (FIG. 4)

Optimization of parameters (weights and threshold values) is performed for each produced topology using GA. N combinations of parameters of the range determined for the topology are first generated at random, making an initial group of chromosomes. FIG. 11(b) shows the initial group for the topology determined by the above-mentioned bond matrix. In this manner, chromosomes are established for the topologies in a list format. Optimization is preformed by applying GA to this initial group. The degree of fitness of each parameter is used as an index of this optimization.

The degree of fitness of the initial group is obtained by generating the expression profile at each individual piece based on the parameters of the chromosome and performing, for example, total sum square error TSS between each target profile. This total sum square error TSS performs the following calculations.

As shown in FIG. 3(a), a target profile is given as time series data of concentration. For this reason, the concentration of each expression material A, B, and C occurring at time t is represented as LTA(t), LTB(t), and LTC(t), and the concentration of each expression material, which is computed using the above expression (1) based on each parameter of the generated chromosomes can be represented as LEA(t), LEB(t), and LEC(t). The total sum square error TSS between these can be represented in the following manner:

$$TSS \quad = \quad \sum_{X}^{A,B,C} \sum_{t=0}^{T} \left( L_{TX}(t) - L_{EX}(t) \right)^2$$

The total sum square TSS found in this manner is made to be the degree of fitness of each generated network (chromosome).

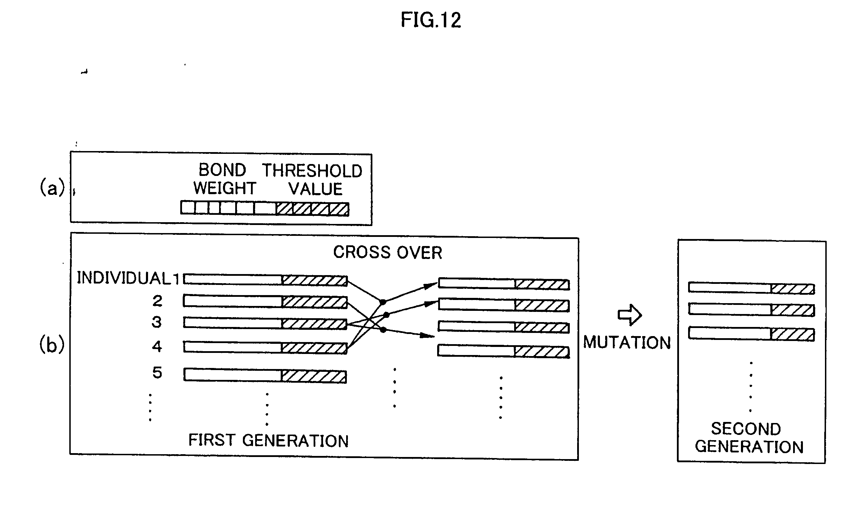

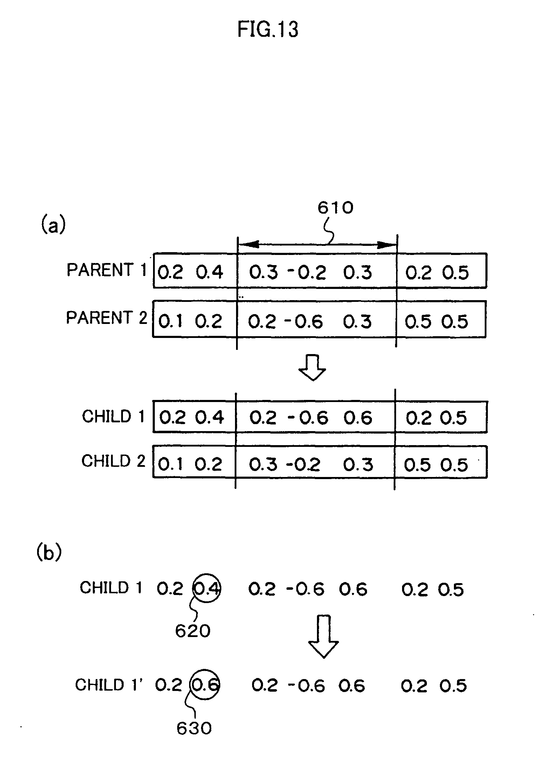

By using a degree of fitness found in this manner, it is possible to perform optimization for the parameters (bond weights and threshold values) of each topology using GA. This processing is described using FIG. 12 and FIG. 13 with an example where optimization is performed using GA crossover and mutation.

As shown in FIG. 12(a), the topology parameter is represented as a list of bond weights and threshold values. To begin with, an individual pair, which is to be the parents, is determined using, for example, a tournament strategy. This includes randomly selecting the number of individuals corresponding to the tournament size (for example, 2). The individual having the highest degree of fitness among the individuals selected is made one of the parents. By carrying this out one more time, the pair of parents is determined. As shown in FIG. 12(b) crossover is caused for this individual pair to generate the offspring parameters; moreover the generated parameters are then subjected to mutation; and the degree of fitness is then calculated with the generated parameters. A second generation of individual groups is obtained by performing this sort of processing until, for example, an established number of offspring are generated.

Crossover and mutation processing is described in detail using FIG. 13. In FIG. 13(a), portions 610 shown by the arrows of the parameters of Parent 1 and Parent 2 represented in the list are swapped so as to generate Child 1 and Child 2. This is the crossover processing. FIG. 13(b) shows that one of the circled parameters (bond weight 0.4) 620 of Child 1 is changed to a separate value (bond weight 0.6) 630. This change is a mutation and subjected to processing so that it occurs randomly at, for example, a fixed probability.

By repeating this crossover and mutation processing, for example, for a decided number of generations, parameters for a certain topology can be optimized. It is noted that an elite preservation strategy can be applied to all generations. The elite preservation strategy is a technique involving passing on the individuals having the highest fitness in the group to the next generation without causing any changes through crossover and mutation.

Once the above processing has finished for all of the topologies, from this, topology sub group D+, which has a degree of fitness below the (in the case of this example, of the total sum square error) degree of fitness, is defined using the following equation.

$$D^+ = \quad \left\{ D^+ \in D \,|\, TSS(D^+) \leq T^+ \right\}$$

The triplet (topology, parameters, and degree of fitness) of the extracted topology subgroup is stored in triplet pool 400. It is noted that optimal parameters are generated through GA for all topologies stored in topology pool 300 in this embodiment; however, in the case where the number of topologies stored in topology pool 300 is huge, the established number of topologies may be randomly selected and the parameters optimized for this may be generated using GA. Up to this point has been the global search stage.

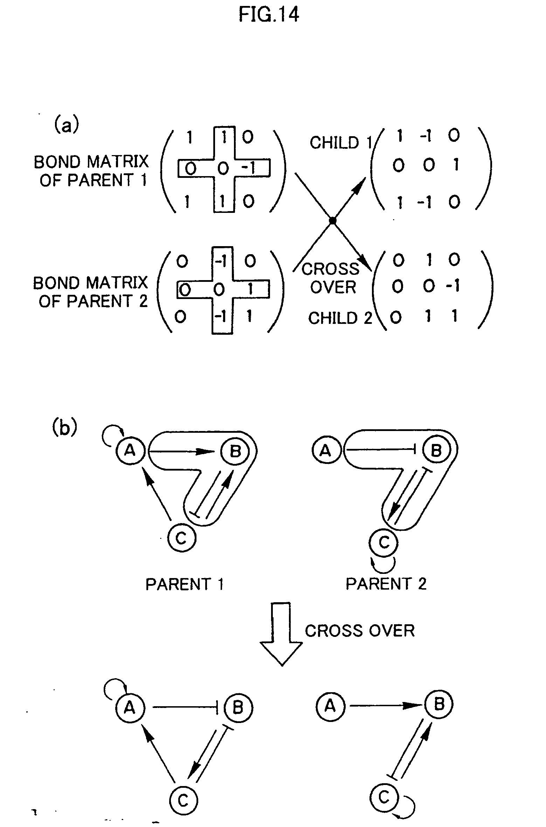

The triplets stored in this triplet pool are further subjected to optimization using another GA technique, adding the resulting triplets. The GA applied here is a two-dimensional GA. This two-dimensional GA is described in FIG. 14. FIG. 14(a) is an example represented by a bond matrix, and the schematic thereof is shown in FIG. 14(b). As shown in FIG. 14(a), the portions shown by the cross shape in the Parent 1 and Parent 2 bond matrix (that is, the bond relationship centered on B; see FIG. 14(b)) are subjected to crossover, and Child 1 and Child 2 are generated. In this manner, unlike with crossover on the list (parameters) described in FIG. 13(a), crossover targeting the physical structure itself of the network is performed. Such processing is useful for optimization of a two-dimensional structure. Parameters for topologies obtained by applying two-dimensional GA are found by optimizing using GA similar to that mentioned earlier. This is executed for a decided number of generations. Then as described above, only triplets having a fitness grade of T+ or lower are further stored in triplet pool 14. It is possible to also apply an elite preservation strategy in the additional GA processing following this.

SA (simulated annealing) is executed on triplets stored in triplet pool 400, the topology space in the vicinity of each topology is searched, and parameters optimized for the obtained topologies using GA in the same manner as earlier are found. The reason for performing searches in this vicinity is because the local searching ability of GA is inferior.

The basic SA algorithm used is as follows using a pseudo-code. This is the portion applied to each topology.

```
MAIN(){ INITIALIZE()

        WHILE (DOES NOT SATISFY STOPPING REQUIREMENT){


            WHILE (DOES NOT REACH THE STATE OF EQUILIBRIUM) {

                GENERATE NEXT STATE ()

                IF (ACCEPT (E, E', T))

                RENEW ()

            }

            T= REDUCE (T)

        }

    }
```

The E within the above ACCEPT (E, E', T) is a variable defining a state called energy in SA, and in this case, uses the degree of fitness of each network. E' is the degree of fitness of the triplets generated during "GENERATE NEXT STATE 0" processing. In addition, in the SA algorithm T is a temperature parameter, and in this case, is a variable defining a state where only this processing is used. Variable T is set to an initial value $T_{init}$ when processing begins. In addition, stopped state and balanced state can use, for example, the processing count.

"ACCEPT (E, E', T)" and "REDUCE (T)" are defined in the following manner.

$$ACCEPT(E; \quad E', \quad T) = \begin{cases} 1 & E' \leq E \\ e^{-(E-E')/T} & Other \end{cases}$$

$$REDUCE(T) \quad = \quad \gamma \quad T \qquad (0 < \gamma \leq 1)$$

The processing represented by the above pseudo code is described forthwith. Once the topology, which is the object of the processing, is selected, variables T and E are initialized. Then, processing is repeated a certain number of times within the defined loop, and to begin with, processing called "GENERATE NEXT STATE 0" is performed. This "GENERATE NEXT STATE 0" performs the following processing.

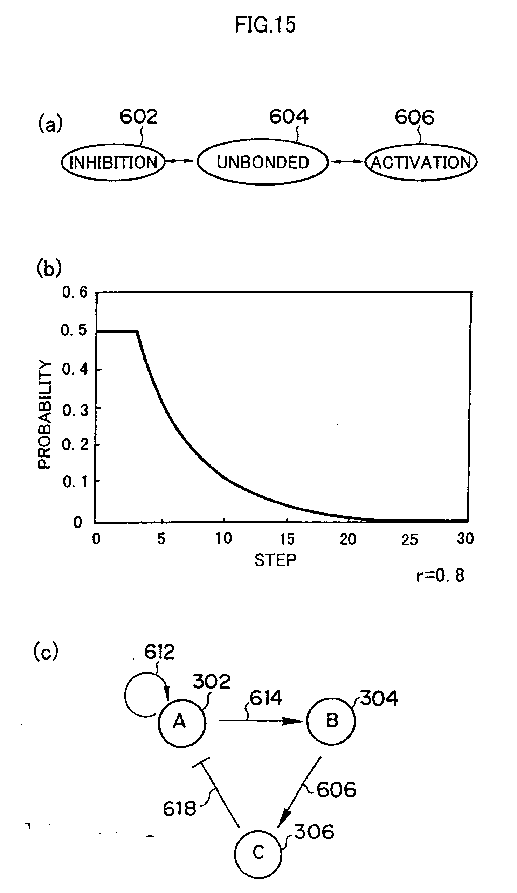

Based on the topology to be processed, topology with a changed bond relationship is generated. This change is based on the state transition diagram shown in FIG. 15(a), and the topology to be processed is changed according to probability P. This transitional probability is defined as the following using the above-mentioned variable T.

$$P \quad = \quad \begin{cases} T/T_{init} & T/T_{init} \leq Threshold\,Value \\ Threshold\,Value & Other \end{cases}$$

Here, T is the above-mentioned variable and the threshold value is set to, for example, 0.5. The reason why the threshold value is introduced is because if the transitional probability is made very high, it would be necessary to search many changed topologies against the targeted topology, which is not a vicinity search. Since T changes at "REDUCE (T)", which is located on the outside loop, the state transition probability does not change within the inside loop. FIG. 15(b) shows how state transition probability changes with the outside loop steps. In this case, $\gamma$ is, for example, 0. 8. Changes in the topology are described with the example of topology shown in FIG. 15(c). This is the same as the topology in FIG. 3(b). It is noted that the case where state transition probability is 0.5 is described. In FIG. 15(c), since the bond from A to A is activation-bonded, in the state transition diagram of FIG. 15(a), it is in activation state 606. From this state, only state transitions to un-bonded 604 are possible. The probability of a state transition occurring is 0.5. Next, if the bonds from A to B are looked at these are also activation-bonded, in the same manner, with a 0.5 probability, so that they may change to an un-bonded state. Since the bond from B to B is in an un-bonded state, there is a 0.25 probability of state transition to an inhibition state and to an activation state each (total of 0.5). In the following manner, all of the bond relationships are changed based on the state transition diagram of FIG. 15(a) and the probability in FIG. 15(b).

In this manner, for each obtained topology, which is the result of each bond relationship forming the target topology changed with the probability mentioned above in accordance with each transition diagram, optimum parameters are next determined using the above-mentioned GA, and the degree of fitness of the parameters is calculated. This generates a new triplet. At this point "GENERATE NEXT STATE 0" is completed, and the next process "ACCEPT (E, E', T)" is executed.

With this "ACCEPT (E, E', T)", the degree of fitness (E) of the triplet having the target topology, and the degree of fitness (E') of the generated topology are compared, and if the degree of fitness of the generated topology is low (well adapted), 1 (true) is returned. In addition, even if the generated fitness is high (not well adapted), 1 (true) is returned with a certain probability. In this case, when T is high (when there are not very many process times), the probability of 1 (true) being returned increases. When "ACCEPT (E, E', T)" returns a 1 (true), "RENEW 0" processing is performed, and the triplet generated by "GENERATE NEXT STATE 0" is renewed.

This continues until the state of equilibrium inside the loop is obtained (in this case until the number of processing times have been performed). When processing has been performed the predetermined number of times, the outside processing ("REDUCE (T)") is performed, a new T is found, and, using this T, inside processing is performed. In this case, outside processing is also performed, for example, the predetermined times.

Then when the fitness of the triplet finally reaches T+, it enters the triplet pool.

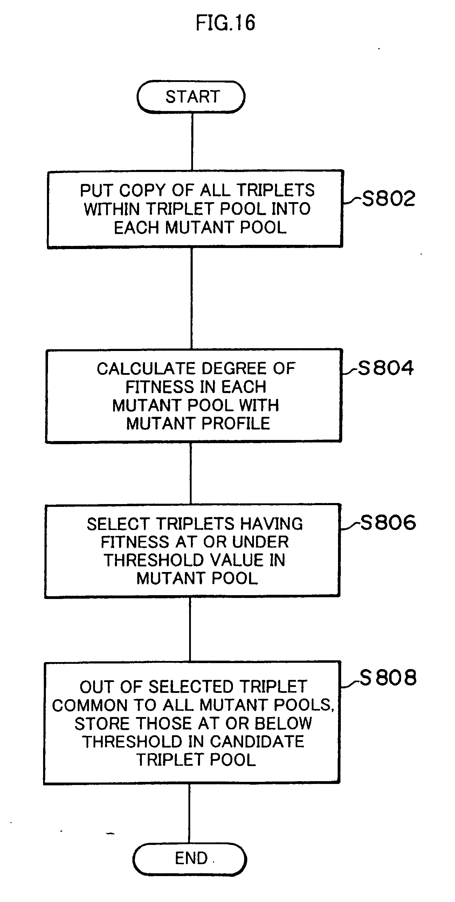

At the time this stage ends in the above-mentioned manner, the vicinity of each topology in triplet pool 400 is searched and the replacement triplet having a more favorable fitness is stored. The processing ultimately selecting the candidate triplet from this triplet is described forthwith. This uses the expression profile of various mutations and calculates fitness with it. This processing is described using the flowchart of FIG. 16.

The profile as shown in FIG. 3(c) and FIG. 3(d) is first prepared according to the mutation. FIG. 3(c) and FIG. 3(d) are a mutant profile where gene B is missing and a mutant profile where genes is missing. The respectively corresponding mutant pools are then prepared and all of the triplets within the above-mentioned triplet pool are stored in each mutant pool (S802).

The triplet topologies are made into mutant topologies for the triplets stored in each mutant pool, and using the parameters as they are, the degree of fitness with the corresponding mutant profile is calculated (S804).

Out of the triplets in each mutant pool, those triplets with a calculated degree of fitness at or below a predetermined threshold value established for each mutation are selected (S806). Those selected triplets within each mutant pool, which are triplets common in all mutant pools and have a degree of fitness at or below a predetermined threshold level, are stored in a candidate triplet pool (S808).

With this, it is possible to decide upon appropriate candidate triplets.

## Other Applications

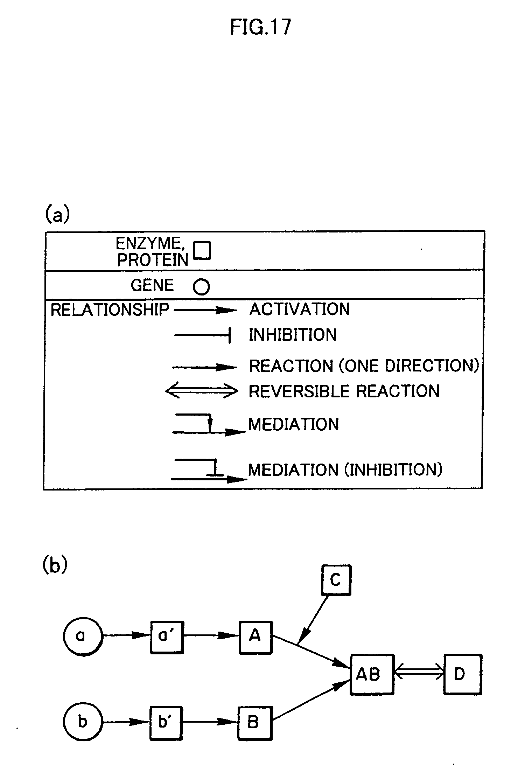

In the above description, an example of a genetic network is described; however, it can also be applied to, for example, a genetic/metabolic circuit network. FIG. 17 shows a network of a genetic/metabolic circuit. As shown in FIG. 17(a), genes, metabolic enzymes, and protein are given as nodes with the relationships between activation, inhibition, and mediation represented as links. A network using these is shown in FIG. 17(b). The processing described above-can be used for the network structure shown in FIG. 17(b).

In the above, a genetic network and a metabolic circuit network are shown as a target network; however, it can also be applied to a neural circuit network as the target network. The data (target profile) in this case would require the use of neuron activation potential.

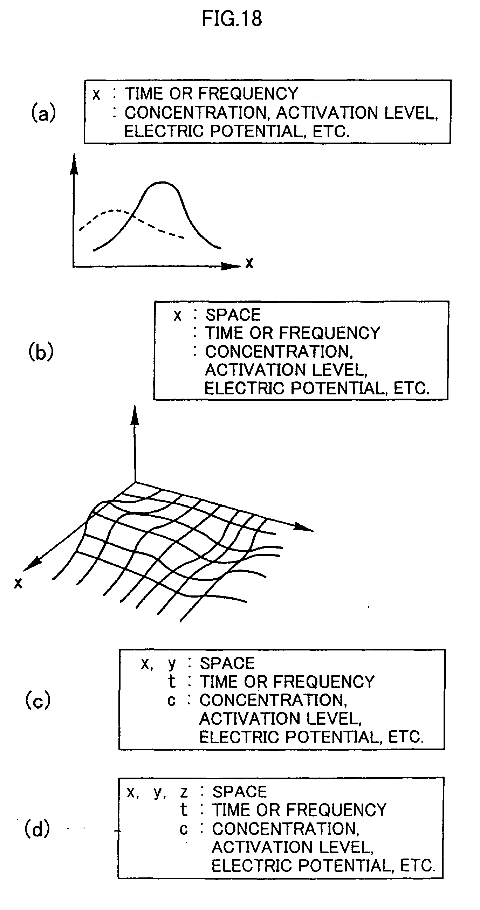

In this manner, it is possible to use the techniques of the present invention for various objects. Various examples of applicable target profiles are shown in FIG. 18. FIG. 18(a) shows the case where the target profile is zero-dimensional space data. Examples of this data include data which fluctuates in terms of time or frequency. For example, this may be concentration, degree of activity, or electric potential. FIG. 18(b) shows one-dimensional space data. This data is of x space and of an amount dependent on time or space. This amount may be a concentration, degree of activity, or electrical potential. The target profiles shown in FIGS. 18(c) and (d) are two-dimensional space data and three-dimensional space data. These are data of an amount dependent on two dimensional (x, y) or three-dimensional (x, y, and z) space, and time or frequency. This amount may be a concentration, degree of activity, or electrical potential. As shown in FIG. 12, it is possible for a target profile to be given in various data formats.

In this manner, the present invention is effective in cases where there exists a target profile, and estimation of the network structure of that target profile is being attempted.

The present invention may be structured from not only a stand-alone computer, but is also applicable with a cluster of computers, for example a client/server system.

The structure of the present invention can be achieved by reading a program from a recording medium stored with the program related to the present invention and executing it with a system. Such a recording medium includes DVD, MD, MO, floppy disk, CD-ROM, magnetic tape, ROM cassette, etc.

**Industrial Applicability**

As described above, the present invention is extremely effective in cases where there exists data to be used as a target profile, and estimation of the network structure yielding that target profile is being attempted.

In particular, it can be effectively applied to model estimation in molecular biology such as with a genetic network or metabolic network.

**Claims**

1. A method of operating a data processing system which estimates candidate networks that are descriptive of relationships between interrelated elements as a network and that, when data generated by said elements from said network is given, are capable of reproducing data based on said data given;
said network being represented by a triplet (To) comprising:

   a network structure (No),
   a parameter set (Po), and
   a degree of fitness (Fo) between said data given and data reproduced from the network structure and the parameter set,

   said method comprising the steps of:

   generating (S104) a plurality of candidate networks (412-418, 422-424, 452-458) by
   producing network structures (310-350) based on partially known network structures, which may allow for reproduction of said data given,
   producing corresponding parameter sets and degrees of fitness,
   optimizing said networks utilizing the degrees of fitness, and
   storing the optimized candidate networks in a first memory means (400); and
   narrowing down (S106) appropriate candidate networks from said networks stored in the first memory means (400), using data different from said given data and that can be generated from network structures which are mutants or crossovers, and storing the networks in a second memory means (500).

2. The method mentioned in claim 1, wherein the optimization using the degree of fitness in said step of generating (S104) said plurality of candidate networks (412-418) comprises steps of:

   selecting N network structures from the produced network structures,
   producing N network structures from said selected N network structures,

adapting M parameter sets to each of the 2N networks utilizing degree of fitness to generate the networks, and selecting P networks of high degree of fitness from the generated 2N*M networks.

3. The method mentioned in claim 2, wherein the optimization using the degree of fitness in said step of generating (S104) said plurality of candidate networks (412-418) further comprises steps of:

searching the vicinity of said selected P networks, and
replacing the network when finding a network of higher degree of fitness.

4. The method mentioned in claim 1 or claim 2, wherein the optimization using the degree of fitness in said step of generating (S104) said plurality of candidate networks (412-418) comprises a step of estimating parameters using a genetic algorithm, simulated annealing, and/or an optimization technique such as the hill-climbing method.

5. A network estimation apparatus, which estimates candidate networks that are descriptive of relationships between interrelated elements as a network and that, when data generated from said network is given, are capable of reproducing said data based on said data given; said network estimation apparatus comprising:

first memory means (400) for storing networks represented by a triplet (To) comprising a network structure (No), a parameter set (Po), and a degree of fitness (Fo) between said data given and data reproduced from the network structure and the parameter set;
second memory means (500) for storing networks as final candidates;
means (S104) for generating a plurality of candidate networks (412-418, 422-424, 452-458) by producing a network structure (310-350) based on partially known network structures, which may allow for reproduction of said data given, producing corresponding parameter sets and degrees of fitness, optimizing said networks utilizing the degrees of fitness, and storing in said first memory means (400) the optimized candidate networks; and
means (S106) for narrowing down and storing in said second memory means (500) an appropriate candidate network from networks stored in said first memory means using data different from said given data and that can be generated from network structures which are mutants or crossovers.

6. A computer program embodied on a computer readable medium comprising code means adapted to perform all the steps of any one of claims 1 through 8 when said program is run on a data-processing system.

**Patentansprüche**

1. Verfahren zum Betreiben eines Datenverarbeitungssystems, das Kandidatennetzwerke abschätzt, die Beziehungen zwischen in Wechselbeziehung stehenden Elementen als Netzwerk beschreiben und in der Lage sind, wenn durch diese Elemente von diesem Netzwerk erzeugte Daten gegeben sind, Daten basierend auf den gegebenen Daten zu reproduzieren;
wobei das Netzwerk dargestellt wird durch ein Triplett (To) mit
einer Netzwerkstruktur (No),
einem Parametersatz (Po) und
einem Anpassungsmaß (Fo) zwischen den gegebenen Daten und den aus der Netzwerkstruktur und dem Parametersatz reproduzierten Daten;
wobei das Verfahren die Schritte aufweist:

Erzeugen (S104) einer Mehrzahl von Kandidatennetzwerken (412-418, 422-424, 452-458) durch
Erzeugen von Netzwerkstrukturen (310-350) auf der Grundlage von teilweise bekannten Netzwerkstrukturen, die die Reproduktion der gegebenen Daten ermöglichen können,
Erzeugen entsprechender Parametersätze und Anpassungsmaße,
Optimieren der Netzwerke unter Verwendung der Anpassungsmaße,
Speichern der optimierten Kandidatennetzwerke in einem ersten Speichermittel (400); und
Eingrenzen (S106) geeigneter Kandidatennetzwerke aus den in dem ersten Speichermittel (400) gespeicherten Netzwerken unter Verwendung von Daten, die sich von den gegebenen Daten unterscheiden und die aus Netzwerkstrukturen erzeugt werden können, die Mutanten oder Crossover sind, und Speichern der Netzwerke in einem zweiten Speichermittel (500).

**2.** Verfahren nach Anspruch 1, bei dem das Optimieren unter Verwendung des Anpassungsmaßes in dem Schritt zum Erzeugen (S104) der Mehrzahl von Kandidatennetzwerken (412-418) die Schritte aufweist:

Wählen von N Netzwerkstrukturen aus den erzeugten Netzwerkstrukturen,
Erzeugen von N Netzwerkstrukturen aus den gewählten N Netzwerkstrukturen,
Anpassen von M Parametersätzen an jedes der 2N Netzwerke unter Verwendung des Anpassungsmaßes zum Erzeugen der Netzwerke, und
Wählen von P Netzwerken mit hohem Anpassungsmaß aus den erzeugten 2N*M Netzwerken.

**3.** Verfahren nach Anspruch 2, bei dem das Optimieren unter Verwendung des Anpassungsmaßes in dem Schritt zum Erzeugen (S104) der Mehrzahl von Kandidatennetzwerken (412-418) weiter die Schritte aufweist:

Durchsuchen der Nachbarschaft der ausgewählten P Netzwerke, und
Ersetzen des Netzwerks, wen ein Netzwerk mit höherem Anpassungsmaß gefunden wird.

**4.** Verfahren nach Anspruch 1 oder 2, bei dem das Optimieren unter Verwendung des Anpassungsmaßes in dem Schritt zum Erzeugen (S104) der Mehrzahl von Kandidatennetzwerken (412-418) einen Schritt enthält zum Abschätzen von Parametern unter Verwendung eines genetischen Algorithmus, von Simulated Annealing, und/oder einer Optimierungstechnik wie z.B. dem Hill-climbing-Verfahren.

**5.** Netzwerkabschätzvorrichtung, die Kandidatennetzwerke abschätzt, die Beziehungen zwischen in Wechselbeziehung stehenden Elementen als Netzwerk beschreiben und in der Lage sind, wenn durch diese Elemente von diesem Netzwerk erzeugte Daten gegeben sind, Daten basierend auf den gegebenen Daten zu reproduzieren;
wobei die Netzwerkabschätzvorrichtung enthält:

ein erstes Speichermittel (400) zum Speichern von Netzwerken, die durch ein Triplett (To) dargestellt werden, das eine Netzwerkstruktur (No), einen Parametersatz (Po) und ein Anpassungsmaß (Fo) zwischen den gegebenen Daten und den aus der Netzwerkstruktur und dem Parametersatz reproduzierten Daten enthält,
ein zweites Speichermittel (500) zum Speichern von Netzwerken als endgültigen Kandidaten,
ein Mittel (S104) zum Erzeugen einer Mehrzahl von Kandidatennetzwerken (412-418, 422-424, 452-458) durch Erzeugen einer Netzwerkstruktur (310-350) auf der Grundlage von teilweise bekannten Netzwerkstrukturen, die die Reproduktion der gegebenen Daten ermöglichen können, Erzeugen entsprechender Parametersätze und Anpassungsmaße, Optimieren der Netzwerke unter Verwendung der Anpassungsmaße und Speichern der optimierten Kandidatennetzwerke in dem ersten Speichermittel (400); und
ein Mittel (S106) zum Eingrenzen geeigneter Kandidatennetzwerke aus den in dem ersten Speichermittel gespeicherten Netzwerken unter Verwendung von Daten, die sich von den gegebenen Daten unterscheiden und die aus Netzwerkstrukturen erzeugt werden können, die Mutanten oder Crossover sind.

**6.** Computerprogramm, das auf einem computerlesbaren Medium verkörpert ist und Codemittel enthält zum Durchführen all der Schritte eines der Ansprüche 1 bis 8, wenn das Programm auf einem Datenverarbeitungssystem ausgeführt wird.

## Revendications

**1.** Procédé de mise en oeuvre d'un système de traitement de données qui estime des réseaux candidats qui sont descriptifs des relations entre des éléments reliés mutuellement sous forme d'un réseau et tel que, lorsque des données générées par lesdits éléments à partir dudit réseau sont fournies, il soit capable de reproduire des données fondées sur lesdites données fournies,
ledit réseau étant représenté par un triplet (To) comprenant :

une structure de réseau (No),
un ensemble de paramètres (Po), et
un degré d'adéquation (Fo) entre lesdites données fournies et des données reproduites à partir de la structure de réseau et de l'ensemble de paramètres,
ledit procédé comprenant les étapes consistant à :

générer (S104) une pluralité de réseaux candidats (412 à 418, 422 à 424, 452 à 458)

en produisant des structures de réseaux (310 à 350) sur la base des structures de réseaux partiellement connues, qui peuvent permettre une reproduction desdites données fournies,

en produisant des ensembles de paramètres et des degrés d'adéquation correspondants,

en optimisant lesdits réseaux en utilisant les degrés d'adéquation, et

en mémorisant les réseaux candidats optimisés dans un premier moyen de mémoire (400), et

en réduisant (S106) les réseaux candidats appropriés à partir desdits réseaux mémorisés dans le premier moyen de mémoire (400), en utilisant des données différentes desdites données fournies et qui peuvent être générées à partir des structures de réseaux qui représentent des mutants ou des croisements, et mémoriser les réseaux dans un second moyen de mémoire (500).

2. Procédé mentionné selon la revendication 1, dans lequel l'optimisation utilisant le degré d'adéquation dans ladite étape consistant à générer (S104) ladite pluralité de réseaux candidats (412 à 418) comprend les étapes consistant à :

sélectionner N structures de réseaux à partir des structures de réseaux produites,

produire N structures de réseaux à partir des N structures de réseaux sélectionnées,

adapter M ensembles de paramètres à chacun des 2N réseaux en utilisant un degré d'adéquation pour générer les réseaux, et

sélectionner P réseaux ayant un haut degré d'adéquation à partir des $2N \times M$ réseaux générés.

3. Procédé selon la revendication 2, dans lequel l'optimisation utilisant le degré d'adéquation dans ladite étape de génération (S104) de ladite pluralité de réseaux candidats (412 à 418) comprend en outre les étapes consistant à :

effectuer une recherche dans le voisinage desdits P réseaux sélectionnés, et

remplacer le réseau lors de la découverte d'un réseau de degré d'adéquation supérieur.

4. Procédé selon la revendication 1 ou la revendication 2, dans lequel l'optimisation utilisant le degré d'adéquation dans ladite étape de génération (S104) de ladite pluralité de réseaux candidats (412 à 418) comprend une étape consistant à estimer des paramètres en utilisant un algorithme génétique, un annelage simulé, et/ou une technique d'optimisation telle que le procédé de recherche des extrêmes.

5. Dispositif d'estimation de réseau, qui estime des réseaux candidats qui sont descriptifs des relations entre des éléments reliés mutuellement sous forme d'un réseau et tels que, lorsque des données générées à partir dudit réseau sont fournies, ils sont capables de reproduire lesdites données sur la base desdites données fournies, ledit dispositif d'estimation de réseau comprenant :

un premier moyen de mémoire (400) destiné à mémoriser des réseaux représentés par un triplet (To) comprenant une structure de réseau (No), un ensemble de paramètres (Po), et un degré d'adéquation (Fo) entre lesdites données fournies et des données reproduites à partir de la structure de réseau et de l'ensemble de paramètres,

un second moyen de mémoire (500) destiné à mémoriser des réseaux sous forme de candidats finaux,

un moyen (S104) destiné à générer une pluralité de réseaux candidats (412 à 418, 422 à 424, 452 à 458) en produisant une structure de réseau (310 à 350) sur la base des structures de réseaux partiellement connues, qui peut permettre une reproduction desdites données fournies, en produisant des ensembles de paramètres et des degrés d'adéquation correspondants, en optimisant lesdits réseaux en utilisant les degrés d'adéquation, et en mémorisant dans ledit premier moyen de mémoire (400) les réseaux candidats optimisés, et

un moyen (S106) destiné à réduire et à mémoriser dans ledit second moyen de mémoire (500) un réseau candidat approprié à partir des réseaux mémorisés dans ledit premier moyen de mémoire en utilisant des données différentes desdites données fournies et qui peuvent être générées à partir des structures de réseaux qui sont des mutants ou des croisements.

6. Programme informatique mis en oeuvre sur un support lisible par un ordinateur comprenant un moyen de code conçu pour exécuter toutes les étapes selon l'une quelconque des revendications 1 à 8, lorsque ledit programme est exécuté sur un système de traitement de données.

FIG.1

# FIG.2

(a)

| | |
|---|---|
| GENE ◯ | |
| RELATIONSHIP ──────▶ ACTIVATION | |
| ─────┤ INHIBITION | |

(b)

FIG.3

(a)

(b)

(c)

(d)

EP 1 223 547 B1

## FIG.4

FIG.5

(a)

(b)

## FIG.6

```
                    ( SAMPLING )
                         │          S202
                         ▼
              ┌─────────────────────────┐
              │  RANDOMLY SELECT ONE     │
              │      TOPOLOGY            │
              └─────────────────────────┘
                         │          S204
                         ▼
              ┌─────────────────────────┐
              │   ADAPT M PARAMETERS     │
              └─────────────────────────┘
                         │          S206
                         ▼
    NO              ◇ HAVE N ◇
   ◄───────────  BEEN SELECTED
                        ?
                         │ YES     S208
                         ▼
              ┌─────────────────────────┐
              │  PRODUCE (N+1) TO 2N     │
              │  TOPOLOGIES OPTIMIZED    │
              │    USING N TRIPLETS      │
              └─────────────────────────┘
                         │          S210
                         ▼
              ┌─────────────────────────┐
              │ ADAPT M PARAMETERS TO EACH│
              │ OF (N+1) TO 2N TOPOLOGIES │
              └─────────────────────────┘
                         │          S212
                         ▼
              ┌─────────────────────────┐
              │  OUT OF 2N×M TRIPLETS,    │
              │  KEEP THOSE WITH HIGH     │
              │  DEGREE OF FITNESS        │
              └─────────────────────────┘
                         │          S214
                         ▼
              ┌─────────────────────────┐
              │ SEARCH VICINITY OF EACH   │
              │ TRIPLET TO FIND A TRIPLET │
              │ WITH A HIGHER DEGREE      │
              │     OF FITNESS            │
              └─────────────────────────┘
                         │          S216
                         ▼
              ┌─────────────────────────┐
              │  ADD FOUND TRIPLETS TO    │
              │    TOPOLOGY POOL          │
              └─────────────────────────┘
                         │
                         ▼
                     ( END )
```

## FIG.7

TOPOLOGY 1 — 310

PARAMETER TUNING
WITH GA, SA, etc.

$T_0^0$: TRIPLET    $T_0^1$    $T_0^2$    $T_0^M$

$N_0$: TOPOLOGY
$P_0^0$: PARAMETER SET
$F_0^0$: DEGREE OF FITNESS

412

$N_0$
$P_0^1$
$F_0^1$

414

$N_0$
$P_0^2$
$F_0^2$

416

$N_0$
$P_0^M$
$F_0^M$

418

320 — TOPOLOGY 2

$T_1^0$   $T_1^1$   $T_1^2$   $T_1^M$

422    424    426    428

350 — TOPOLOGY N

$T_N^0$   $T_N^1$   $T_N^2$   $T_N^3$

452    454    456    458

FIG.8

P TRIPLETS

TOPOLOGY SPACE

## FIG.9

SCREENING

TRIPLET POOL — 450

TRIPLET

GENERATE MUTANT TRIPLET — S402

MUTANT POOL 1 — 452
MUTANT POOL 2 — 454
MUTANT POOL X — 456

EVALUATE FITNESS USING TARGET DATA (MUTANT PROFILE) — S404

INTEGRATE DEGREES OF FITNESS EVALUATED FOR EACH POOL AND SELECT FINAL CANDIDATE GROUP — S406

TRIPLET POOL — 500

FIG.10

| | TOPOLOGY 1 | TOPOLOGY 2 | · · · · | TOPOLOGY X |
|---|---|---|---|---|
| WILD | 12 | 15 | · · · · | 32 |
| MUTANT 1 | 8 | 6 | · · · · | 23 |
| MUTANT 2 | 16 | 10 | · · · · | 12 |
| | ⋮ | ⋮ | | ⋮ |
| MUTANT X | 13 | 5 | · · · · | 22 |
| +) | | | | |
| | 382 | 293 | | 512 |

## FIG.11

CHROMOSOME

(a)

| BOND WEIGHT | | | | THRESHOLD VALUE OF EACH NODE | | |
|---|---|---|---|---|---|---|
| A→A | A→B | B→C | C→A | A | B | C |
| [0~1] | [0~1] | [0~1] | [-1~0] | [0~1] | [0~1] | [0~1] |

(b)

INITIAL GROUP

| | | | | | | | |
|---|---|---|---|---|---|---|---|
| 0.2 | 0.4 | 0.2 | -0.1 | 0.6 | 0.2 | 0.3 | INDIVIDUAL 1 |
| 0.3 | 0.7 | 0.2 | -0.3 | 0.6 | 0.2 | 0.4 | INDIVIDUAL 2 |
| 0 | 0.2 | 0.5 | -0.6 | 0.3 | 0.3 | 0.3 | INDIVIDUAL 3 |
| ⋮ | ⋮ | ⋮ | ⋮ | ⋮ | ⋮ | ⋮ | ⋮ |
| 0.3 | 0.2 | 0.6 | -0.5 | 0.2 | 0.4 | 0.6 | INDIVIDUAL N |

FIG.12

# FIG.13

(a)

610

| PARENT 1 | 0.2 0.4 | 0.3 -0.2 0.3 | 0.2 0.5 |
|---|---|---|---|
| PARENT 2 | 0.1 0.2 | 0.2 -0.6 0.3 | 0.5 0.5 |

⇩

| CHILD 1 | 0.2 0.4 | 0.2 -0.6 0.6 | 0.2 0.5 |
|---|---|---|---|
| CHILD 2 | 0.1 0.2 | 0.3 -0.2 0.3 | 0.5 0.5 |

(b)

CHILD 1    0.2  ⓞ.4    0.2 -0.6  0.6    0.2 0.5

620

⇩

CHILD 1'   0.2  ⓞ.6    0.2 -0.6  0.6    0.2 0.5

630

# FIG.14

(a)

BOND MATRIX OF PARENT 1
$$\begin{pmatrix} 1 & 1 & 0 \\ 0 & 0 & -1 \\ 1 & 1 & 0 \end{pmatrix}$$

CHILD 1
$$\begin{pmatrix} 1 & -1 & 0 \\ 0 & 0 & 1 \\ 1 & -1 & 0 \end{pmatrix}$$

CROSS OVER

BOND MATRIX OF PARENT 2
$$\begin{pmatrix} 0 & -1 & 0 \\ 0 & 0 & 1 \\ 0 & -1 & 1 \end{pmatrix}$$

CHILD 2
$$\begin{pmatrix} 0 & 1 & 0 \\ 0 & 0 & -1 \\ 0 & 1 & 1 \end{pmatrix}$$

(b)

PARENT 1          PARENT 2

CROSS OVER

## FIG.15

(a)

(b)

r=0. 8

(c)

FIG.16

START

PUT COPY OF ALL TRIPLETS
WITHIN TRIPLET POOL INTO
EACH MUTANT POOL — S802

CALCULATE DEGREE OF
FITNESS IN EACH
MUTANT POOL WITH
MUTANT PROFILE — S804

SELECT TRIPLETS HAVING
FITNESS AT OR UNDER
THRESHOLD VALUE IN
MUTANT POOL — S806

OUT OF SELECTED TRIPLET
COMMON TO ALL MUTANT POOLS,
STORE THOSE AT OR BELOW
THRESHOLD IN CANDIDATE
TRIPLET POOL — S808

END

FIG.17

(a)

| ENZYME, PROTEIN □ |
|---|
| GENE ○ |
| RELATIONSHIP ——▶ ACTIVATION |
| ——⊢ INHIBITION |
| ——▶ REACTION (ONE DIRECTION) |
| ⇐⇒ REVERSIBLE REACTION |
| ⌐▶ MEDIATION |
| ⌐ MEDIATION (INHIBITION) |

(b)

## FIG.18

(a)

```
x : TIME OR FREQUENCY
  : CONCENTRATION, ACTIVATION LEVEL,
    ELECTRIC POTENTIAL, ETC.
```

(b)

```
x : SPACE
  : TIME OR FREQUENCY
  : CONCENTRATION,
    ACTIVATION LEVEL,
    ELECTRIC POTENTIAL, ETC.
```

(c)

```
x, y : SPACE
   t : TIME OR FREQUENCY
   c : CONCENTRATION,
       ACTIVATION LEVEL,
       ELECTRIC POTENTIAL, ETC.
```

(d)

```
x, y, z : SPACE
      t : TIME OR FREQUENCY
      c : CONCENTRATION,
          ACTIVATION LEVEL,
          ELECTRIC POTENTIAL, ETC.
```